# EUROPEAN PATENT SPECIFICATION

(11) **EP 1 699 668 B1**
(45) Date of publication and mention of the grant of the patent: **19.09.2007**
(21) Application number: 04801412.0
(22) Date of filing: 15.12.2004
(51) Int. Cl.: B60T 7/06

(54) **AN ADJUSTABLE SET OF PEDALS FOR A MOTOR VEHICLE**
EINSTELLBARER PEDALENSATZ FÜR EIN KRAFTFAHRZEUG
JEU DE PEDALES REGLABLES

(30) Priority: 19.12.2003 IT BO20030763
(43) Date of publication of application: 13.09.2006
(73) Proprietor: FERRARI S.p.A., 41100 Modena (IT)
(72) Inventor: STEFANI, Giovanni, I-41049 Sassuolo (IT)
(74) Representative: Jorio, Paolo
(86) International application number: PCT/IB2004/004195
(87) International publication number: WO 2005/061292

(56) References cited:
- US-A- 2 860 720
- US-A- 3 151 499
- US-A- 6 151 985
- US-A1- 2001 013 262
- US-B1- 6 189 409

## Description

### TECHNICAL FIELD

The present invention relates to an adjustable set of pedals for a motor vehicle.

### BACKGROUND ART

Motor vehicles currently on the market are provided with a driving position comprising a driving seat, a steering wheel, a set of pedals, and a dashboard. Since the physical characteristics of the person or persons that will drive the motor vehicle are not known a priori, it is necessary to provide a series of adjusting devices, which enable the positions of the various components of the driving position to be varied with respect to one another so as to adapt the proportions of the driving position to the physical characteristics of the driver. In the majority of motor vehicles available on the market, the set of pedals and the dashboard are arranged in fixed positions, the steering wheel is generally height-adjustable, and the seat is adjustable both as regards the height and as regards its distance from the steering wheel. The solution that envisages maintaining the dashboard, set of pedals, and steering wheel substantially fixed and pushing the seat forwards and backwards is simple and inexpensive to produce and is hence used in the vast majority of motor vehicles. However, this solution also presents some drawbacks in so far as is it is impossible to provide a geometry of the dashboard that will enable its instrumentation to be properly visible in every seat position.
Furthermore, the solution just described entails the construction of a driving position that is relatively extensive in length so as to obtain a sufficiently long travel of the seat. The requisite is fully acceptable in a motor vehicle with four or more seats, i.e., in a motor vehicle that is also provided with rear seats, but can prove problematical in a two-seater motor vehicle, i.e., in a motor vehicle without rear seats, which has an overall length of the passenger compartment that is relatively small.
To overcome the drawbacks described above solutions have been proposed in which the driving seat is fixed and the set of pedals and the steering wheel are mobile with respect to the seat so as to vary their distance from the seat.
In particular, many solutions have been proposed to provide an adjustable set of pedals for a motor vehicle. However, the known solutions present various drawbacks in so far as they have a very short stroke of adjustment, are complex, and are difficult to produce.
US2860720 discloses an adjustable toeboard for an automobile; the toeboard is swingably mounted and means are provided for adjusting the angular position of the toeboard to swing it toward or away from the seat.
US3151499 discloses an adjustable pedal for vehicle having a system for adjusting the positions of the brake and accelerator pedals to a particular operator without changing the motion transmitting relationships of the pedals to the systems being controlled by pedal actuation.

### DISCLOSURE OF INVENTION

The purpose of the present invention is to provide an adjustable set of pedals for a motor vehicle that will be free from the drawbacks described above and will be simple and inexpensive to produce.
According to the present invention an adjustable set of pedals for a motor vehicle is provided as recited in the attached Claims.

### BRIEF DESCRIPTION OF THE DRAWINGS

The present invention will now be described with reference to the annexed plate of drawings, which illustrate a non-limiting example of embodiment thereof, wherein:
Figure 1 is a schematic perspective view of a preferred embodiment of the adjustable set of pedals according to the present invention;
Figures 2 and 3 are two side views of the adjustable set of pedals of Figure 1, illustrated in two different operative positions;
Figure 4 is a longitudinal sectional view of a first detail of Figure 1, illustrated in two different Operative positions; and
Figure 5 is a longitudinal sectional view of a second detail of Figure 1, illustrated in two different operative positions.

### BEST MODE FOR CARRYING OUT THE INVENTION

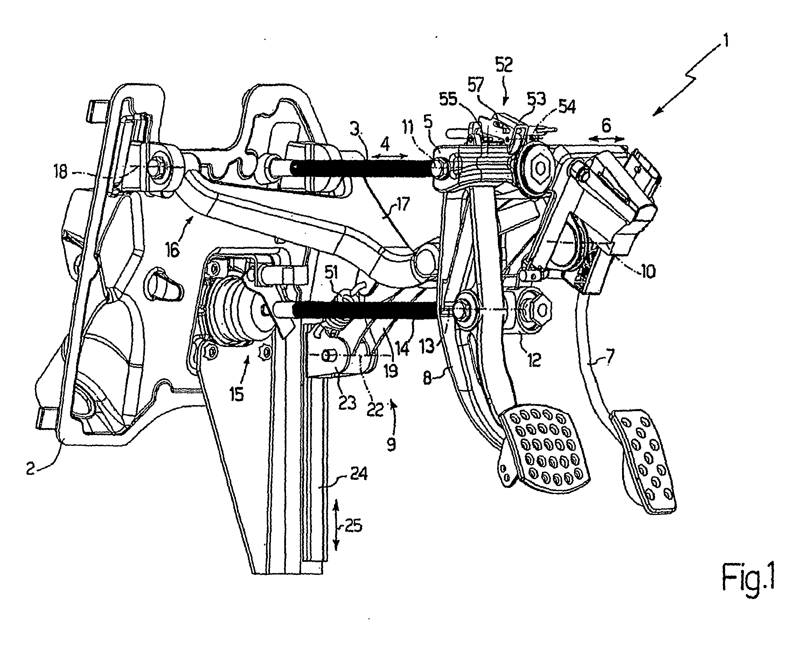

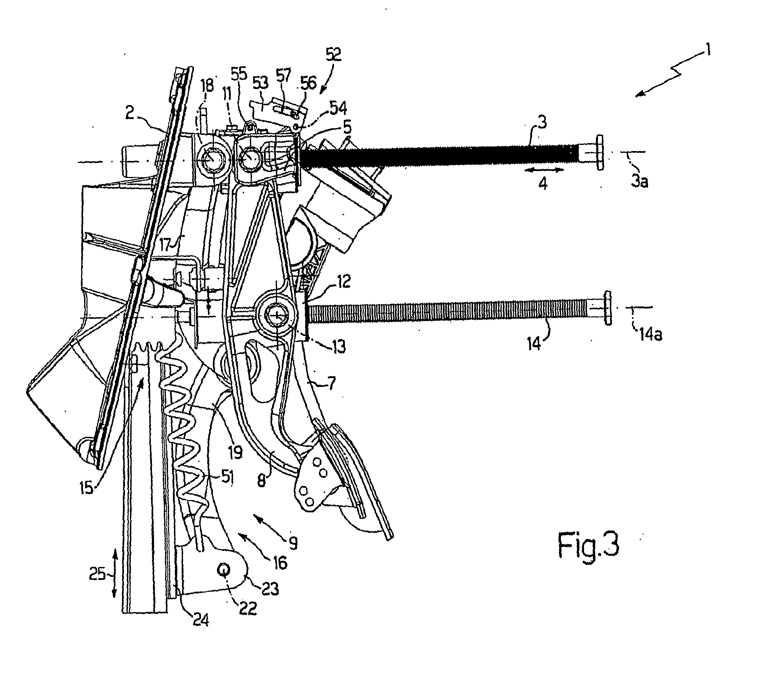

With reference to Figures 1, 2, and 3, designated as a whole by 1 is an adjustable set of pedals for a motor vehicle (not illustrated).

The set of pedals 1 comprises a fixing plate 2, which enables anchorage of the set of pedals 1 itself to a fixed frame (not illustrated) of the motor vehicle (not illustrated), and supports a toothed guide rod 3, which projects from the plate 2 in a given direction 4, has a longitudinal axis 3a, and is provided with a toothing having, in longitudinal sectional view, a substantially V-shape.

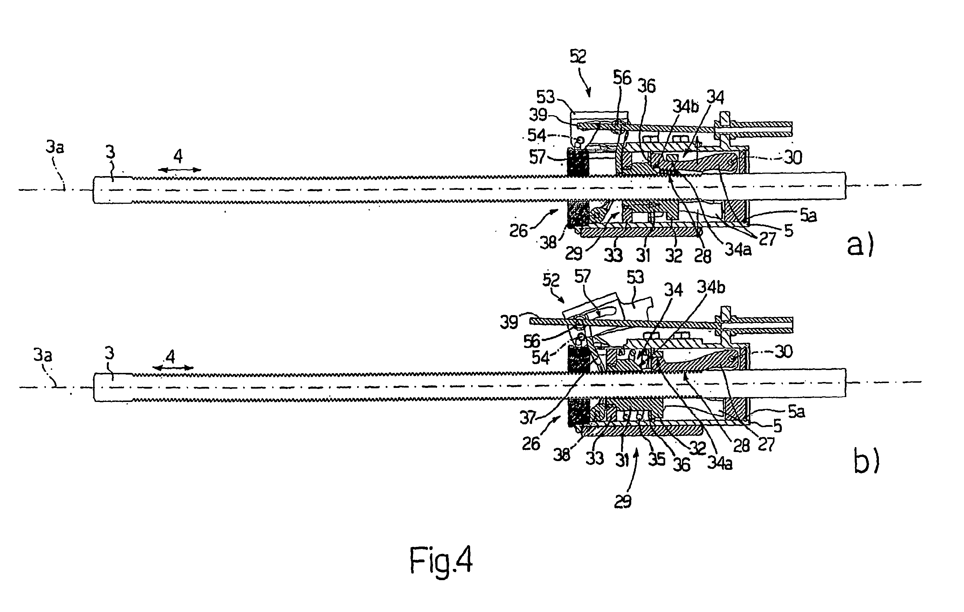

The rod 3 is slidably engaged by a slide 5, which extends in a direction 6 substantially transverse to the direction 4, has a central hole 5a (Figure 4) made through the slide 5 and set so that it shares the axis 3a of the rod 3, supports, in the case in point, two pedals 7, 8 for acceleration and, respectively, braking of the motor vehicle (not illustrated), and is mobile along the rod 3 itself under the action of the thrust of an actuating device 9 that will be illustrated in greater detail in what follows.

According to a variant (not illustrated), the slide 5 further supports a clutch pedal of the motor vehicle (not illustrated).

The pedal 7 is a pedal of a known type, mounted on the slide 5 for oscillating, with respect to the slide 5 itself, about an axis 10 of fulcrum substantially parallel to the direction 6, and the pedal 8 is hinged, in a position corresponding to a free end of its own, to the slide 5 for oscillating, with respect to the slide 5 itself, about an axis 11 of fulcrum substantially parallel to the axis 10.

The pedal 8 is hinged, moreover, in a position corresponding to an intermediate point thereof, to a sleeve 12 for oscillating, with respect to the sleeve 12 itself, about an axis 13 of fulcrum substantially parallel to the axis 11.

The sleeve 12 is mounted coaxially to a toothed rod 14, which has a. longitudinal axis 14a parallel to the axis 3a, and is provided with a toothing having, in longitudinal sectional view, a substantially saw-toothed shape. The sleeve 12 is coupled in an axially slidable manner to the rod 14 to perform, along the rod 14 itself and under the action of the thrust of the device 9, rectilinear displacements in the direction 4, and is connectable (according to modalities that will be described in greater detail in what follows) to the rod 14 to impart on the rod 14 itself, following upon oscillation of the pedal 8 about the axis 11, rectilinear displacements in the direction 4 so as to control selectively operation of a braking device 15 of a known type.

The actuating device 9 comprises a crank mechanism 16 comprising, in turn, a crank 17, hinged to the plate 2 for oscillating, with respect to the plate 2 itself, about an axis 18 of fulcrum substantially parallel to the direction 6, and a connecting rod 19, which is hinged, in a position corresponding to an intermediate point thereof, to one free end of the crank 17 for oscillating, with respect to the crank 17 itself, about an axis 20 of fulcrum parallel to the axis 18, and extends between two axes 21, 22 parallel to the axis 20, and of which the axis 21 is the axis of rotation of the connecting rod 19 with respect to the slide 5, and the axis 22 is the axis of rotation of the connecting rod 19 with respect to a pad 23 coupled slidably to a rectilinear guide 24 extending in a direction 25 orthogonal to the directions 4 and 6.

According to what is illustrated in Figure 4, the device 9 further comprises a clamping device 26, which enables blocking of the slide 5 along the rod 3, and comprises a plurality of gripping arms 27 (in the case in point, three arms 27), which are mounted within the hole 5a, are uniformly distributed around the rod 3 and hence around the axis 3a, and have respective toothed portions 28 set in a position facing the rod 3 itself.

The arms 27 are hinged to the slide 5 for oscillating, with respect to the slide 5 itself and under the action of the thrust of an actuator device 29, about respective axes 30 of fulcrum transverse to the axis 3a itself between a position of clamping (Figure 4b), in which the arms 27 set themselves at a distance from one another approximating by defect the diameter of the rod 3 so as to enable the portions 28 to engage the rod 3 itself, and a position of release (Figure 4a), in which the arms 27 set themselves at a distance from one another approximating by excess the diameter of the rod 3 so as to enable the portions 28 to disengage the rod 3 itself.

The device 29 comprises a mechanically actuated tubular piston 31, which is mounted, within the hole 5a, so that it shares the axis 3a of the rod 3, is coupled slidably to the rod 3, and is provided, in a position corresponding to a first free end of its own, with an annular flange 32 extending radially outwards from the outer surface of the piston 31, and, in a position corresponding to a second free end of its own, with a cup 33 fixed to the piston 31 itself perpendicular to the axis 3a.

The piston 31 has a plurality of races 34, which are uniformly distributed about the axis 3a, are equal in number to the arms 27, are slidably engaged, each, by a respective arm 27, and comprise, each, a respective first stretch 34a made through the flange 32 parallel to the axis 3a and a respective second stretch 34b made through the piston 31 and inclined with respect to the axis 3a itself.

The device 29 further comprises a spring 35, which is mounted within the hole 5a so that it shares the axis 3a of the rod 3, and is set between the cup 33 and an annular element 36 fixed within the hole 5a for displacing the piston 31 into, and normally maintaining it in, a resting position (Figure 4b), in which the free ends of the arms 27 engage the corresponding stretches 34a and the portions 28 set themselves on the outside of the corresponding races 34 to engage the rod 3.

The piston 31 is mobile, under the action of the thrust of a lever 37, hinged within the hole 5a for oscillating about an axis 38 of fulcrum transverse to the axis 3a and against the thrust of the spring 35, from the aforesaid resting position to an operative position (Figure 4a), in which the free ends of the arms 27 engage the corresponding stretches 34b and the portions 28 engage the corresponding stretches 34a to disengage the rod 3.

The lever 37 projects radially outwards from the slide 5 to be actuated by a cable 39 of a Bowden type designed to displace the lever 37 itself about the axis 38.

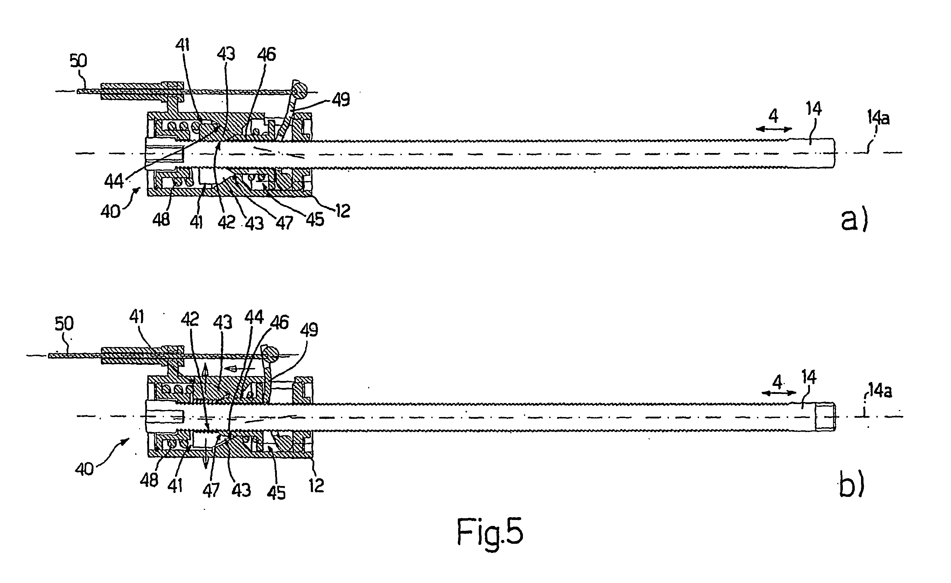

With reference to Figure 5, the device 9 further comprises a clamping device 40, which enables blocking of the sleeve 12 along the rod 14 and comprises a plurality of gripping members 41 (in the case in point, three members 41), which are mounted within the sleeve 12, and are uniformly distributed around the rod 14. Each member 41 is limited radially by a toothed face 42, which extends parallel to the axis 14a and is set in a position facing the rod 14, and is limited axially by a substantially wedge-shaped portion 43 set in engagement with a race 44 shaped like a truncated cone made on the internal surface of the sleeve 12 and normally common to all the members 41.

The members 41 are mobile, under the action of the thrust of an actuator device 45, between a position of clamping (Figure 5a), in which the members 41 set themselves at a distance from one another approximating by defect the diameter of the rod 14 so as to enable the faces 42 to engage the rod 14 itself, and a position of release (Figure 5b), in which the members 41 set themselves at a distance from one another, approximating by excess the diameter of the rod 14 so as to enable the faces 42 to disengage the rod 14 itself.

The device 45 comprises: a mechanically actuated tubular piston 46, which is mounted within the sleeve 12 so that it shares the axis 14a of the rod 14, is coupled slidably to the rod 14, and is limited axially by a surface 47 substantially shaped like a truncated cone, set in engagement with the portions 43; and a spring 48, which is fitted on the rod 14 so that it shares the axis 14a of the rod 14 and is set between the sleeve 12 and the members 41 for displacing the members 41 themselves into, and normally maintaining them in, their clamping position, and for displacing the piston 46 into, and normally maintaining it in, a resting position (Figure 5a).

The piston 46 is mobile, under the action of the thrust of a lever 49, which extends through the sleeve 12 to be actuated by a cable 50 of a Bowden type, and against the thrust of the spring 48, from the aforesaid resting position to an operative position (Figure 5b), in which the members 41 are displaced along the race 44 and into their position of release.

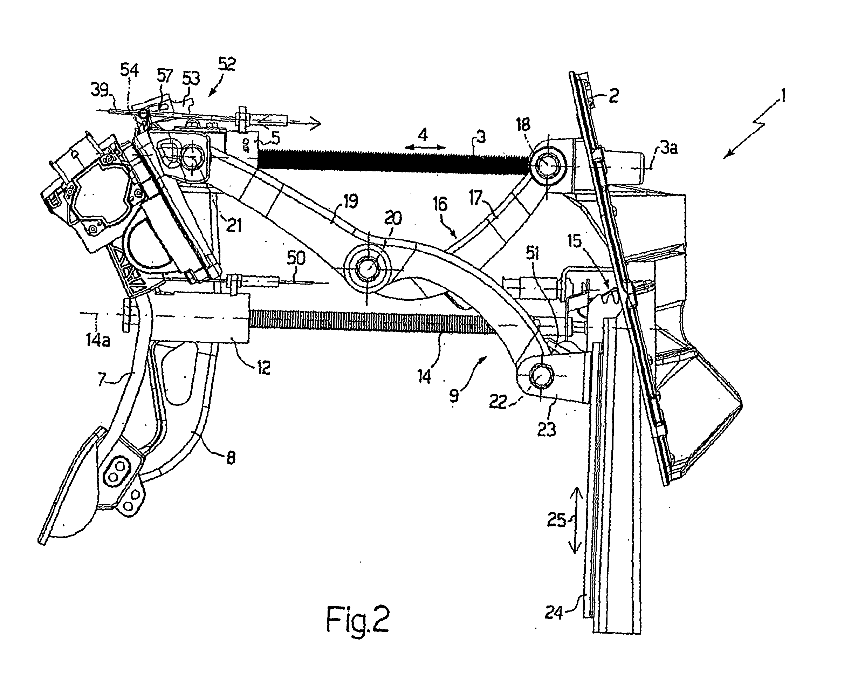

In connection with what is set forth above, it should moreover be pointed out that:
- the cable 50 is normally connected to the cable 39 to enable the driver of the motor vehicle (not illustrated) to actuate the devices 26 and 40 with a single operation; and
- when the devices 26 and 40 are displaced into their positions of release, the crank mechanism 16 is displaced into, and normally kept, in an operative position (see Figures 1 and 2), in which the slide 5 and hence the pedals 7, 8 are set at the maximum distance from the plate 2, by a spring 51 set between the crank 17 and the pad 23.

Finally, the device 9 comprises a device 52 for clamping the pedal 8 about the axis 11, which in turn comprises a crank 53, which is hinged to the slide 5 for oscillating, with respect to the slide 5 itself, about an axis 54 of fulcrum parallel to the direction 6, and is mobile between a position of clamping (Figure 4a), in which the crank 53 engages a pin 55 projecting from the pedal 8 parallel to the direction 6 itself, and a position of release (Figures 1 and 4b). The crank 53 is actuated by the cable 39 via a pin 56, which is fixed to the cable 39 itself, extends parallel to the direction 6, and is mobile along a groove 57 made in the crank 53 so as to displace the device 52 into its clamping position, before displacing the devices 26 and 40 into their positions of release, and into its position of release, after displacing the devices 26 and 40 into their clamping positions.

According to a variant (not illustrated), the device 26 is replaced with a clamping device designed to control selectively the position of the crank 17 about the axis 18.

According to a further variant (not illustrated), the rods 3 and 14 are replaced with two threaded rods, which are set in rotation by respective electric motors or, alternatively, by a single motor common to both of the threaded rods, and are coupled to the slide 5 and to the sleeve 12 via respective external-thread/internal-thread couplings.

In use, the driver of the motor vehicle actuates the cables 39 and 50 so as to displace, in the first place, the device 52 into its clamping position and prevent oscillation of the pedal 8 about the axis 11 and then displace the devices 26 and 40 into their positions of release. At this point, the crank mechanism 16 is displaced by the spring 51 into its operative position illustrated in Figures 1 and 2, the set of pedals 1 is displaced in the direction 4 by the driver via the engagement of the pedal 8, and, finally, once the desired position along the rod 3 has been reached, the cables 39 and 50 are released by the driver himself to enable, in the first place, the devices 26 and 40 to be set in their clamping positions and hence the device 52 to be set in its position of release.

The set of pedals 1 presents a number of advantages chiefly deriving from the fact that the slide 5, and hence the axes 10, 11 of fulcrum of the pedal 7 and, respectively, of the pedal 8, are displaced along a rectilinear path parallel to the direction 4, and from the fact that the crank mechanism 16 enables, in a simple and inexpensive way, relatively extensive displacements of the slide 5 in the direction 4.

## Claims

1. An adjustable set of pedals for a motor vehicle, the adjustable set of pedals comprising:
a first pedal (8) for braking of the motor vehicle;
a second pedal (7) for acceleration of the motor vehicle;
means for supporting (5) the first and second pedal (8, 7) ; and
an adjustment device (9) for controlling selectively the position of the supporting means (5) with respect to a frame (2) of the motor vehicle and comprising a crank mechanism (16) set between the supporting means (5) and the frame (2);
the adjustable set of pedals is **characterized in that** the adjustment device (9) comprises:
a first guide (3) extending in a first direction (4) and supporting the supporting means (5) which are mobile along the first guide (3) ; and
a control rod (14) parallel to the first direction (4), slidably engaged through the first pedal (8), and connectable with the first pedal (8) for actuating a braking device (15) of the motor vehicle.

2. The adjustable set of pedals according to Claim 1, wherein the first guide (3) comprises a first screw mounted so that it can rotate about a first longitudinal axis (3a); the supporting means (5) being coupled to the first screw via a first external-thread/internal-thread coupling.

3. The adjustable set of pedals according to Claim 1 or Claim 2, wherein the adjustment device (9) further comprises: a second guide (24) extending in a second direction (25) substantially transverse to the first direction (4) ; and a slide (23), mounted so that it can slide along the second guide (24) under the action of the thrust of the crank mechanism (16).

4. The adjustable set of pedals according to Claim 3, wherein the crank mechanism (16) comprises a connecting rod (19) set between the supporting means (5) and the slide (23); and a crank (17) set between the frame (2) and the connecting rod (19).

5. The adjustable set of pedals according to Claim 3 or Claim 4, wherein the supporting means (5) are mobile under the action of the thrust of the crank mechanism (16) between a first end position and a second end position; thrust means (51) are provided for displacing the supporting means (5) into, and normally maintaining them in, one of the first and second end positions.

6. The adjustable set of pedals according to Claim 5, wherein the thrust means (51) are elastic thrust means set between the slide (23) and the crank mechanism (16).

7. The adjustable set of pedals according to any one of Claims 1 to 6, wherein the adjustment device (9) further comprises first clamping means (26) for blocking the supporting means (5) along the first guide (3) ; and a first actuator device (29) for actuating the first clamping means (26) between a first position of clamping of the supporting means (5) along the first guide (3) and a first position of release.

8. The adjustable set of pedals according to Claim 7, wherein the first clamping means (26) comprise a plurality of first clamping members (27) carried by the supporting means (5), distributed around the first guide (3), and mobile away from and towards the first guide (3), and the first actuator device (29) comprises first actuator means (31, 37) for displacing the first clamping members (27) from the first position of clamping to the first position of release, and second actuator means (35) for displacing the first clamping members (27) from the first position of release to the first clamping position.

9. The adjustable set of pedals according to Claim 7 or Claim 8 and further comprising second clamping means (40) for blocking the first pedal (8) along the control rod (14) ; and a second actuator device (45) to actuate the second clamping means (40) between a second position of clamping of the first pedal (8) along the control rod (14) and a second position of release.

10. The adjustable set of pedals according to Claim 9, wherein the second clamping means (40) comprise a plurality of second clamping members (41) carried by the first pedal (8), distributed around the control rod (14), and mobile away from and towards the control rod (14), and the second actuator device (45) comprises third actuator means (46, 49) for displacing the second clamping members (41) from the second position of clamping to the second position of release, and fourth actuator means (48) for displacing the second clamping members (41) from the second position of release to the second clamping position.

11. The adjustable set of pedals according to Claim 9 or Claim 10, wherein the first pedal (8) is rotatably mounted on the supporting means (5) for oscillating about a second axis of fulcrum (11); third clamping means (52) are provided for blocking angularly the first pedal (8) about the axis of fulcrum (11), and a third actuator device (39) is designed to actuate the third clamping means (52) between a third position of clamping of the first pedal (8) about the second axis of fulcrum (11) and a third position of release.

12. The adjustable set of pedals according to Claim 11, wherein the first, second, and third actuator devices (29, 45, 39) are connected together for displacing the third clamping means (52) into the corresponding clamping position, when the first and the second clamping means (26, 40) are displaced into their corresponding positions of release, and into the corresponding position of release when the first and the second clamping means (26, 40) are displaced into their corresponding clamping positions.

13. The adjustable set of pedals according to any one of Claims 1 to 12, wherein the first direction (4) is a substantially rectilinear direction.

14. The adjustable set of pedals according to any one of Claims 1 to 13, wherein the first pedal (8) is coupled to the control rod (14) via a second external-thread/internal-thread coupling.

15. The adjustable set of pedals according to any one of Claims 1 to 14, wherein the first pedal (8) is hinged to the supporting means (5) for oscillating about a second axis of fulcrum (11), and the second pedal (7) is hinged to the supporting means (5) for oscillating, with respect to the supporting means (5), about a fourth axis of fulcrum (10) parallel to the second axis of fulcrum (11).

16. The adjustable set of pedals according to Claim 15, wherein the first pedal (8) is hinged, moreover, in a position corresponding to an intermediate point thereof , to a sleeve (12) slidable along the control rod (14) for oscillating, with respect to the sleeve (12), about a fifth axis of fulcrum (13) substantially parallel to the second axis of fulcrum (11).

17. The adjustable set of pedals according to Claim 16, wherein the sleeve (12) is coupled in an axially slidable manner to the control rod (14) to perform rectilinear displacements along the control rod (14), and is connectable to the control rod (14) to impart on the control rod (14), following upon oscillation of the first pedal (8) about the second axis of fulcrum (11), rectilinear displacements so as to control selectively operation of a braking device (15).

## Patentansprüche

1. Einstellbare Pedalgruppe für ein Kraftfahrzeug, wobei die einstellbare Pedalgruppe umfasst:
ein erstes Pedal (8) zum Bremsen des Kraftfahrzeugs;
ein zweites Pedal (7) zum Beschleunigen des Kraftfahrzeugs;
Mittel (5) zum Unterstützen des ersten und des zweiten Pedals (8, 7); und
eine Einstellvorrichtung (9) zum wahlweisen Steuern der Position der Unterstützungsmittel (5) in Bezug auf einen Rahmen (2) des Kraftfahrzeugs, die einen Kurbelmechanismus (16) umfasst, der zwischen die Unterstützungsmittel (5) und den Rahmen (2) eingesetzt ist;
wobei die einstellbare Pedalgruppe **dadurch gekennzeichnet ist, dass** die Einstellvorrichtung (9) umfasst:
eine erste Führung (3), die sich in einer ersten Richtung (4) erstreckt und die Unterstützungsmittel (5), die längs der ersten Führung (3) beweglich sind, unterstützt; und
einen Steuerstab (14), der zu der ersten Richtung (4) parallel ist und durch das erste Pedal (8) in einem Gleiteingriff ist und mit dem ersten Pedal (8) verbunden werden kann, um eine Bremsvorrichtung (15) des Kraftfahrzeugs zu betätigen.

2. Einstellbare Pedalgruppe nach Anspruch 1, bei der die erste Führung (3) eine erste Schraube umfasst, die so angebracht ist, dass sie sich um eine erste Längsachse (3a) drehen kann; wobei die Unterstützungsmittel (5) mit der ersten Schraube über eine erste Außengewinde-/Innengewinde-Kopplung gekoppelt sind.

3. Einstellbare Pedalgruppe nach Anspruch 1 oder Anspruch 2, bei der die Einstellvorrichtung (9) ferner umfasst: eine zweite Führung (24), die sich in einer zu der ersten Richtung (4) im Wesentlichen quer orientierten zweiten Richtung (25) erstreckt; und einen Gleiter (23), der so angebracht ist, dass er längs der zweiten Führung (24) unter der Wirkung des Schubs des Kurbelmechanismus (16) gleiten kann.

4. Einstellbare Pedalgruppe nach Anspruch 3, bei der der Kurbelmechanismus (16) einen Verbindungsstab (19), der zwischen die Unterstützungsmittel (5) und den Gleiter (23) eingesetzt ist; und eine Kurbel (17), die zwischen den Rahmen (2) und den Verbindungsstab (19) eingesetzt ist, umfasst.

5. Einstellbare Pedalgruppe nach Anspruch 3 oder Anspruch 4, bei der die Unterstützungsmittel (5) unter der Wirkung des Schubs des Kurbelmechanismus (16) zwischen einer ersten Endposition und einer zweiten Endposition beweglich sind; und Schubmittel (51) vorgesehen sind, um die Unterstützungsmittel (5) entweder in die erste oder in die zweite Endposition zu verlagern und sie dort normalerweise zu halten.

6. Einstellbare Pedalgruppe nach Anspruch 5, bei der die Schubmittel (51) elastische Schubmittel sind, die zwischen den Gleiter (23) und den Kurbelmechanismus (16) eingesetzt sind.

7. Einstellbare Pedalgruppe nach einem der Ansprüche 1 bis 6, bei der die Einstellvorrichtung (9) ferner erste Feststellmittel (26) zum Blockieren der Unterstützungsmittel (5) längs der ersten Führung (3); und eine erste Betätigungsvorrichtung (29) zum Betätigen der ersten Feststellmittel (26) zwischen einer ersten Feststellposition der Unterstützungsmittel (5) längs der ersten Führung (3) und einer ersten Freigabeposition umfasst.

8. Einstellbare Pedalgruppe nach Anspruch 7, bei der die ersten Feststellmittel (26) mehrere erste Feststellorgane (27), die von den Unterstützungsmitteln (5) getragen werden und um die erste Führung (3) verteilt sind und von der ersten Führung (3) weg und zu ihr hin beweglich sind, umfassen und die erste Betätigungsvorrichtung (29) erste Betätigungsmittel (31, 37) zum Verlagern der ersten Feststellorgane (27) aus der ersten Feststellposition in die erste Freigabeposition und zweite Betätigungsmittel (35) zum Verlagern der ersten Feststellorgane (27) aus der ersten Freigabeposition in die erste Feststellposition umfasst.

9. Einstellbare Pedalgruppe nach Anspruch 7 oder Anspruch 8, die ferner zweite Feststellmittel (40) zum Blockieren des ersten Pedals (8) längs des Steuerstabs (14); und eine zweite Betätigungsvorrichtung (45) zum Betätigen der zweiten Feststellmittel (40) zwischen einer zweiten Feststellposition des ersten Pedals (8) längs des Steuerstabs (14) und einer zweiten Freigabeposition umfasst.

10. Einstellbare Pedalgruppe nach Anspruch 9, bei der die zweiten Feststellmittel (40) mehrere zweite Feststellorgane (41), die von dem ersten Pedal (8) getragen werden, um den Steuerstab (14) verteilt sind und von dem Steuerstab (14) weg und zu ihm hin beweglich sind, umfasst und die zweite Betätigungsvorrichtung (45) dritte Betätigungsmittel (46, 49) zum Verlagern der zweiten Feststellorgane (41) aus der zweiten Feststellposition in die zweite Freigabeposition und vierte Betätigungsmittel (48) zum Verlagern der zweiten Feststellorgane (41) aus der zweiten Freigabeposition in die zweite Feststellposition umfasst.

11. Einstellbare Pedalgruppe nach Anspruch 9 oder Anspruch 10, bei der das erste Pedal (8) an den Unterstützungsmitteln (5) drehbar angebracht ist, um um eine zweite Drehachse (11) zu oszillieren; dritte Feststellmittel (52) vorgesehen sind, um das erste Pedal (8) um die Drehachse (11) in Drehrichtung zu blockieren, und eine dritte Betätigungsvorrichtung (39) so entworfen ist, dass sie die dritten Feststellmittel (52) zwischen einer dritten Feststellposition des ersten Pedals (8) um die zweite Drehachse (11) und einer dritten Freigabeposition betätigt.

12. Einstellbare Pedalgruppe nach Anspruch 11, bei der die erste, die zweite und die dritte Betätigungsvorrichtung (29, 45, 39) miteinander verbunden sind, um die dritten Feststellmittel (52) in die entsprechende Feststellposition zu verlagern, wenn die ersten und die zweiten Feststellmittel (26, 40) in ihre entsprechenden Freigabepositionen verlagert sind, und in die entsprechende Freigabeposition zu verlagern, wenn die ersten und die zweiten Feststellmittel (26, 40) in ihre entsprechenden Feststellpositionen verlagert sind.

13. Einstellbare Pedalgruppe nach einem der Ansprüche 1 bis 12, bei der die erste Richtung (4) eine im Wesentlichen geradlinige Richtung ist.

14. Einstellbare Pedalgruppe nach einem der Ansprüche 1 bis 13, bei der das erste Pedal (8) mit dem Steuerstab (14) über eine zweite Außengewinde-/lnnengewinde-Kopplung gekoppelt ist.

15. Einstellbare Pedalgruppe nach einem der Ansprüche 1 bis 14, bei der das erste Pedal (8) an den Unterstützungsmitteln (5) angelenkt ist, um um eine zweite Drehachse (11) zu oszillieren, und das zweite Pedal (7) an den Unterstützungsmitteln (5) angelenkt ist, um in Bezug auf die Unterstützungsmittel (5) um eine vierte Drehachse (10), die zu der zweiten Drehachse (11) parallel ist, zu oszillieren.

16. Einstellbare Pedalgruppe nach Anspruch 15, bei der das erste Pedal (8) darüber hinaus in einer Position, die einem Zwischenpunkt hiervon entspricht, an einer Hülse (12) angelenkt ist, die längs des Steuerstabs (14) gleiten kann, um in Bezug auf die Hülse (12) um eine fünfte Drehachse (13) zu oszillieren, die zu der zweiten Drehachse (11) im Wesentlichen parallel ist.

17. Einstellbare Pedalgruppe nach Anspruch 16, bei der die Hülse (12) auf eine axial gleitende Weise mit dem Steuerstab (14) gekoppelt ist, um geradlinige Verlagerungen längs des Steuerstabs (14) auszuführen, und mit dem Steuerstab (14) verbunden werden kann, um auf den Steuerstab (14) in Folge einer Oszillation des ersten Pedals (8) um die zweite Drehachse (11) geradlinige Verlagerungen auszuüben, um den Betrieb einer Bremsvorrichtung (15) wahlweise zu steuern.

## Revendications

1. Jeu réglable de pédales pour un véhicule à moteur, le jeu réglable de pédales comportant :
une première pédale (8) pour le freinage du véhicule à moteur ;
une seconde pédale (7) pour l'accélération du véhicule à moteur ;
des moyens pour supporter (5) les première et seconde pédales (8, 7) ; et
un dispositif de réglage (9) destiné à commander sélectivement la position des moyens de support (5) par rapport à un châssis (2) du véhicule à moteur et comportant un mécanisme à manivelle (16) placé entre le moyen de support (5) et le châssis (2) ;
le jeu réglable de pédales étant **caractérisé en ce que** le dispositif de réglage (9) comporte :
un premier guide (3) s'étendant dans une première direction (4) et supportant les moyens de support (5) qui sont mobiles le long du premier guide (3) ; et
une tige de commande (14) parallèle à la première direction (4), engagée de façon coulissante à travers la première pédale (8) et pouvant être reliée à la première pédale (8) pour actionner un dispositif de freinage (15) du véhicule à moteur.

2. Jeu réglable de pédales selon la revendication 1, dans lequel le premier guide (3) comporte une première vis montée de façon à pouvoir tourner autour d'un premier axe longitudinal (3a) ; le moyen de support (5) étant accouplé à la première vis par l'intermédiaire d'un premier accouplement à filetage extérieur/filetage intérieur.

3. Jeu réglable de pédales selon la revendication 1 ou la revendication 2, dans lequel le dispositif de réglage (9) comporte en outre : un second guide (24) s'étendant dans une seconde direction (25) sensiblement transversale à la première direction (4) ; et un coulisseau (23) monté de façon à pouvoir coulisser le long du second guide (24) sous l'action de la poussée du mécanisme à manivelle (16).

4. Jeu réglable de pédales selon la revendication 3, dans lequel le mécanisme à manivelle (16) comporte une bielle (19) positionnée entre les moyens de support (5) et le coulisseau (23) ; et une manivelle (17) positionnée entre le châssis (2) et la bielle (19).

5. Jeu réglable de pédales selon la revendication 3 ou la revendication 4, dans lequel les moyens de support (5) sont mobiles sous l'action de la poussée du mécanisme à manivelle (16) entre une première position extrême et une seconde position extrême ; des moyens de poussée (51) sont prévus pour amener les moyens de support (5), et les maintenir normalement, dans l'une des première et seconde positions extrêmes.

6. Jeu réglable de pédales selon la revendication 5, dans lequel les moyens de poussée (51) sont des moyens élastiques de poussée positionnés entre le coulisseau (23) et le mécanisme à manivelle (16);

7. Jeu réglable de pédales selon l'une quelconque des revendications 1 à 6, dans lequel le dispositif de réglage (9) comporte en outre des premiers moyens de serrage (26) pour bloquer les moyens de support (5) le long du premier guide (3) ; et un premier dispositif actionneur (29) pour actionner les premiers moyens de serrage (26) entre une première position de serrage des moyens de support (5) le long du premier guide (3) et une première position de libération.

8. Jeu réglable de pédales selon la revendication 7, dans lequel les premiers moyens de serrage (26) comprennent plusieurs premiers éléments de serrage (27) portés par les moyens de support (5), répartis autour du premier guide (3), et pouvant s'éloigner et se rapprocher du premier guide (3), et le premier dispositif actionneur (29) comporte des premiers moyens actionneurs (31, 37) destinés à déplacer les premiers éléments de serrage (27) de la première position de serrage à la première position de libération, et des seconds moyens actionneurs (35) destinés à déplacer les premiers éléments de serrage (27) de la première position de libération à la première position de serrage.

9. Jeu réglable de pédales selon la revendication 7 ou la revendication 8 et comportant en outre des seconds moyens de serrage (40) destinés à bloquer la première pédale (8) le long de la tige de commande (14); et un second dispositif actionneur (45) destiné à actionner les seconds moyens de serrage (40) entre une seconde position de serrage de la première pédale (8) le long de la tige de commande (14) et une seconde position de libération.

10. Jeu réglable de pédales selon la revendication 9, dans lequel les seconds moyens de serrage (40) comprennent plusieurs seconds éléments de serrage (41) portés par la première pédale (8), répartis autour de la tige de commande (14) et pouvant s'éloigner et se rapprocher de la tige de commande (14), et le second dispositif actionneur (45) comporte des troisièmes moyens actionneurs (46, 49) destinés à déplacer les seconds éléments de serrage (41) de la seconde position de serrage à la seconde position de libération, et des quatrièmes moyens actionneurs (48) destinés à déplacer les seconds éléments de serrage (41) de la seconde position de libération à la seconde position de serrage.

11. Jeu réglable de pédales selon la revendication 9 ou la revendication 10, dans lequel la première pédale (8) est montée de façon à pouvoir tourner sur les moyens de support (5) pour osciller autour d'un second axe de pivot (11) ; des troisièmes moyens de serrage (52) sont prévus pour bloquer angulairement la première pédale (8) autour de l'axe de pivot (11), et un troisième dispositif actionneur (39) est conçu pour actionner les troisièmes moyens de serrage (52) entre une troisième position de serrage de la première pédale (8) autour du second axe de pivot (11) et une troisième position de libération.

12. Jeu réglable de pédales selon la revendication 11, dans lequel les premier, deuxième et troisième dispositifs actionneurs (29, 45, 39) sont reliés entre eux pour amener les troisièmes moyens de serrage (52) dans la position de serrage correspondante lorsque les premier et deuxième moyens de serrage (26, 40) sont amenés dans leurs positions correspondantes de libération, et dans la position correspondante de libération lorsque les premier et deuxième moyens de serrage (26, 40) sont amenés dans leurs positions correspondantes de serrage.

13. Jeu réglable de pédales selon l'une quelconque des revendications 1 à 12, dans lequel la première direction (4) est une direction sensiblement rectiligne.

14. Jeu réglable de pédales selon l'une quelconque des revendications 1 à 13, dans lequel la première pédale (8) est accouplée à la tige de commande (14) par l'intermédiaire d'un second accouplement à filetage extérieur/filetage intérieur.

15. Jeu réglable de pédales selon l'une quelconque des revendications 1 à 14, dans lequel la première pédale (8) est articulée sur les moyens de support (5) afin d'osciller autour d'un second axe de pivot (11), et la seconde pédale (7) est articulée sur les moyens de support (5) afin d'osciller, par rapport aux moyens de support (5) autour d'un quatrième axe de pivot (10) parallèle au deuxième axe de pivot (11).

16. Jeu réglable de pédales selon la revendication 15, dans lequel la première pédale (8) est articulée, en outre, dans une position correspondant à un point intermédiaire de celle-ci, sur un manchon (12) pouvant coulisser le long de la tige de commande (14) pour osciller, par rapport au manchon (12), autour d'un cinquième axe de pivot (13) sensiblement parallèle au deuxième axe de pivot (11).

17. Jeu réglable de pédales selon la revendication 16, dans lequel le manchon (12) est accouplé de manière à pouvoir coulisser axialement à la tige de commande (14) pour effectuer des déplacements rectilignes le long de la tige de commande (14), et peut être relié à la tige de commande (14) pour communiquer à la tige de commande (14), à la suite d'une oscillation de la première pédale (8) autour du deuxième axe de pivot (11), des déplacements rectilignes afin de commander sélectivement l'actionnement d'un dispositif de freinage (15).
